# EUROPEAN PATENT APPLICATION

(11) **EP 3 505 296 A1**
(43) Date of publication of application: **03.07.2019**
(21) Application number: 18248163.0
(22) Date of filing: 28.12.2018
(51) Int. Cl.: B23P 19/00, B23P 21/00

(54) **A TROLLEY FOR USE IN ASSEMBLING MECHANICAL COMPONENTS**

(30) Priority: 29.12.2017 IT 201700150962
(71) Applicant: M.A. S.R.L., 40026 Imola (IT)
(72) Inventor: BERTI, Fausto, 40026 Imola (IT)
(74) Representative: Torti, Carlo Maria Emilio

(57) **Abstract**

The invention is set in the field of assembling mechanical components and relates in particular to a trolley (100) for transporting objects, in particular, components of mechanical assemblies, where the aforesaid trolley (100) comprises a base, which supports a handling unit provided with a sled (15) configured to interface with an object (200) to be transported, wherein said handling unit comprises a first sub-assembly for the vertical movement of the object (200) and a second sub-assembly for allowing a rotation of the object (200) about a substantially horizontal axis of the object (200), and wherein the aforesaid trolley further comprises a control panel (150) configured to allow the trolley (100) and the handling unit to perform specific movement sequences stored in a memory unit (160) associated with said control panel (150).

## Description

### FIELD OF THE INVENTION

The present invention belongs to the field of assembling mechanical components. In particular, the present invention belongs to the field of assembling mechanical components for producing (including the assembly and, if necessary, relative testing) of, for example, gearboxes, reducers, differential units and similar. In detail, the present invention relates to a trolley, which can be used for assembling components of the aforesaid type, in particular, for mechanical assemblies of the aforesaid type and therefore usable for carrying out processes of the aforesaid type.

In particular, the present invention improves the relationship, in a completely innovative way, between the minimum weight and dimensions of the transporting trolley with respect to the weight and dimensions of what is being carried and/or handled, thus allowing a minimum relative expenditure of energy.

### PRIOR ART

Various kinds of equipment are known in the art for assembling components of mechanical assemblies.

An equipment of such a type is known from document IT 1 310 474.

Such equipment comprises supporting columns fixed to a base and connected by a crosspiece. The base is provided with at least one anvil translatable in synchronism with at least one punch translatable on the crosspiece and further sliding vertically upwards and downwards.

Each supporting column is equipped with rotary apparatuses, in particular roto-translational, of the manual and\or intelligent type, provided with opposing shelves, which are provided with vertical hinges for performing the opening and closing movements, said shelves also being provided with a rotation pin for making overturning movements, as well as partial rotations of mechanical assemblies subject to simultaneous manual and/or intelligent processing.

The equipment thus configured allows the execution of operative cycles in conjunction with loading and unloading operations of mechanical assemblies having different formats.

Nonetheless, the need is felt to increase the efficiency, productivity and safety of the operations of assembling mechanical components, particularly in the case of operations requiring the use of several workstations, each equipped with respectively different equipment and intended for carrying out respectively different operations, for example, for assembling different mechanical assemblies comprising the use of respectively different mechanical components.

Thus, it is an object of the present invention to make a versatile device, which contributes to optimizing the times for carrying out operations of assembly and testing, as well as for carrying out auxiliary processes. It is a further object to make a trolley capable of interfacing in sequence with a plurality of different assembling equipment.

### BRIEF SUMMARY OF THE INVENTION

The present invention originates from the consideration according to which the previously summarized objects can be achieved, at least in part, using a transporting and positioning trolley for handling mechanical components in the assembly environment, which allows the handling of the components with the maximum degree of freedom, which is capable of interfacing (interacting) with different assembly stations intended for respectively different operations, which is capable of moving in a substantially autonomous manner within the assembly environment, and which is capable of storing and automatically performing different sequences of operations and/or positions and/or configurations.

Based on the above considerations, and for the purpose of achieving the predetermined objects, at least in part, a trolley for transporting objects forms the subject of the present invention, in particular, components of mechanical assemblies, wherein the aforesaid trolley comprises a base, which supports a handling unit provided with a sled configured to interface with an object to be transported, wherein said handling unit comprises a first sub-assembly for the vertical movement of the sled (and thus of the object), and a second sub-assembly for allowing a rotation about a substantially horizontal axis of the object, and wherein the aforesaid trolley further comprises a control panel configured to allow the trolley and the handling unit to perform sequences of specific movements stored in a memory unit associated with said control panel.

According to one embodiment, the handling unit comprises a pair of uprights connected to each other by a crosspiece, wherein said uprights comprise slots for guiding the vertical sliding of the sled. According to one embodiment, the first sub-assembly for the vertical movement of the object transported comprises a fixed screw substantially parallel to said uprights and passing inside a hole obtained in the sled.

According to one embodiment, the first sub-assembly for the vertical movement of the object carried comprises one or more gear motors placed on board the sled, acting on a gear, which cooperates with the fixed screw.

According to one embodiment, in order to allow a rotation about a substantially horizontal axis of the object, the second sub-assembly comprises a gear motor placed on board the sled adapted to actuate a toothed wheel placed inside a hole on the sled, said hole having a substantially horizontal axis.

According to one embodiment, the trolley comprises a rack placed on the base of the trolley adapted to interface with equipment for assembling components of mechanical assemblies so as to regulate the position of the trolley with respect to the equipment being processed. According to one embodiment, the trolley comprises a traction assembly, which commands the advancing of the trolley and a steering assembly.

According to one embodiment, the trolley comprises means for recognizing specific equipment for assembling components of mechanical assemblies with which to interface.

A system comprising a plurality of trolleys according to one of the preceding embodiments further forms the subject of the present invention and a plurality of equipment for assembling components of mechanical assemblies.

One of the advantages offered by the present invention relates to the possibility of having autonomous trolleys, which can repeat sequences of previously stored complex movements depending on the specific process to be carried out.

According to one embodiment, each of the trolleys comprises a control panel and a memory unit associated with said control panel, wherein the control panel is configured to allow the memory unit to store, in an initialization phase, sequences of specific movements for each single piece of equipment and to allow the control panel to command the handling unit of the trolley so as to repeat the specific sequence of movements for each different piece of equipment in successive processing phases.

Further features of the invention can be inferred from the dependent claims.

### BRIEF DESCRIPTION OF THE FIGURES

Further features and advantages will become clearer from the following description provided by way of a non-limiting example, with reference to the figures illustrated in the appended tables, wherein:
- figure 1 illustrates a front perspective view of the embodiment of the trolley of the invention;
- figure 2 illustrates a rear perspective view of the trolley in figure 1;
- figure 3 illustrates the trolley in figures 1-2 in a first work configuration;
- figure 4 illustrates the trolley in figures 1-2 in a second work configuration;
- figure 5 illustrates the trolley in figures 1-2 in a third work configuration;
- figure 6 illustrates the trolley in figures 1-2 in a fourth work configuration;
- figure 7 illustrates the trolley in the preceding figures during processing at a workstation, which comprises equipment for assembling components of mechanical assemblies; and
- figure 8 illustrates a view similar to the view in figure 7 from a different perspective.

### DETAILED DESCRIPTION OF EMBODIMENTS OF THE PRESENT INVENTION

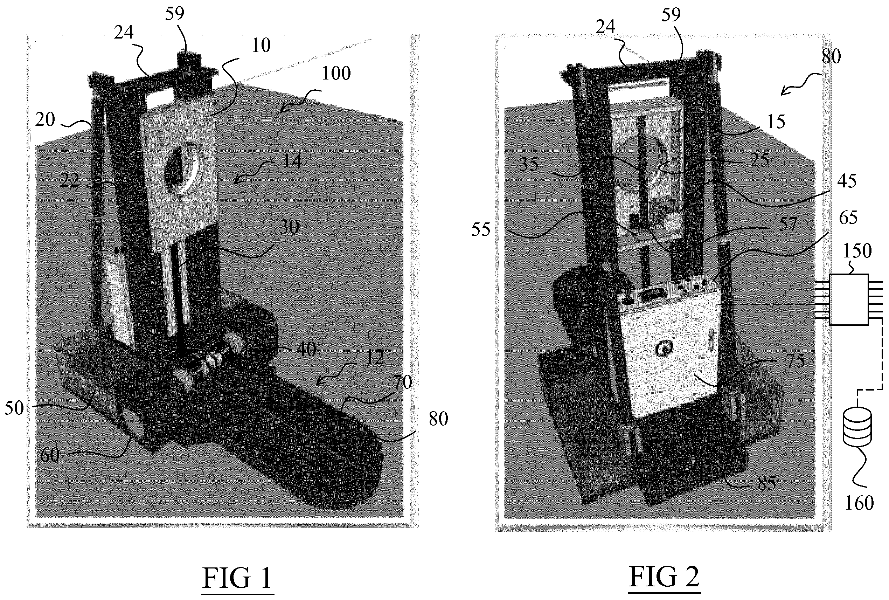

The invention will now be described with initial reference to figure 1 depicting a front perspective view of a movable trolley according to one embodiment of the invention, globally indicated with numeral reference 100.

As anticipated, the trolley 100 can be used for transporting objects, such as, for example, components of mechanical assemblies and for cooperating with equipment, in particular, presses, for assembling components of mechanical assemblies.

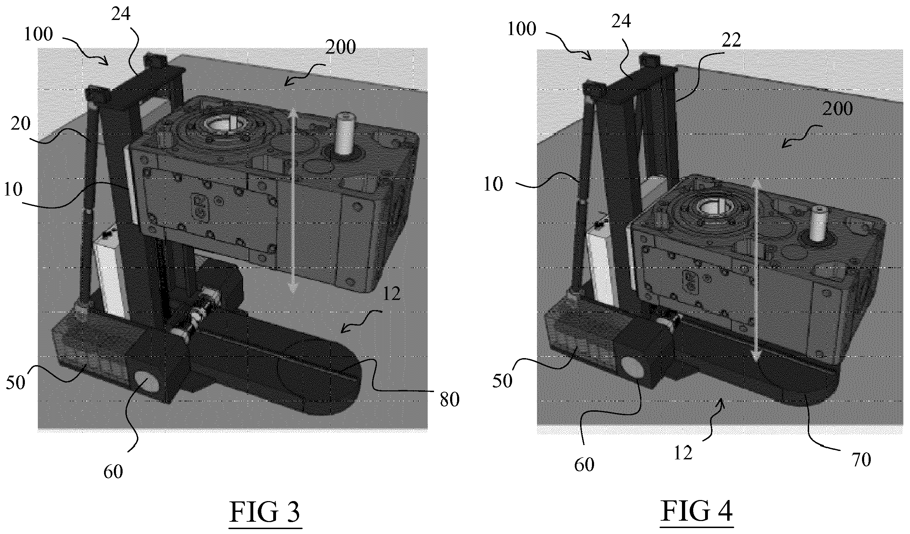

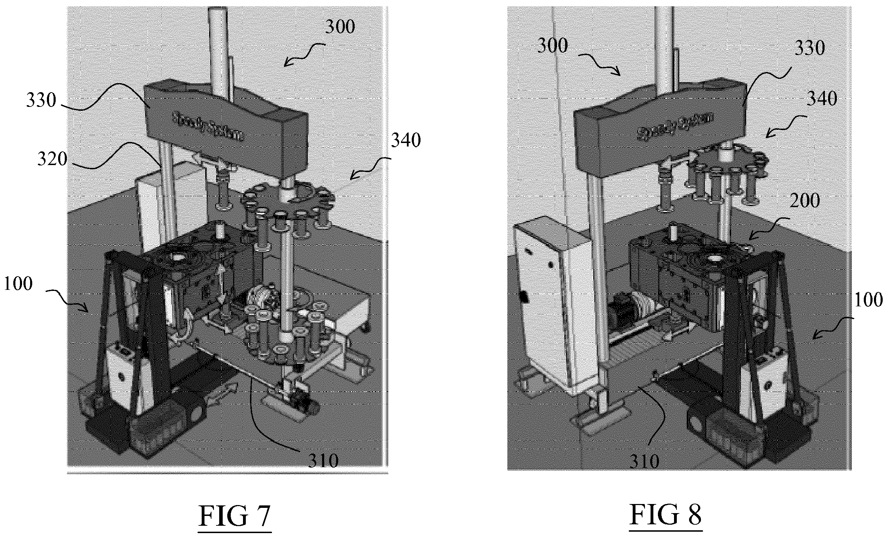

For example, as further illustrated below, the trolley 100 can be used for transporting a mechanical reducer case (figures 3-6) and for cooperating with one or more pieces of equipment of presses 300 for assembly, in particular, for inserting, by pressure, mechanical components in said reducer case (figures 7-8).

In detail, the aforesaid trolley 100 comprises a base 12, which supports a handling unit 14, provided, in turn, with a sled 15 configured to interface with an object 200 to be transported. For example, the object 200 to be moved can be fixed to the sled 15 by means of brackets, bolts and/or similar methods substantially known in themselves to those skilled in the art and thus not described in detail for the sake of brevity.

In a front portion thereof, the sled 15 has a substantially flat surface 10 provided with a hole having a substantially horizontal axis, whose function will be illustrated in further detail below.

The handling unit 14 comprises a first sub-assembly configured to confer a vertical movement to the sled 15 (and therefore to the object 200 when loaded onto, or nonetheless, fixed to the sled), and a second sub-assembly configured to allow a rotation of the sled 15 (and therefore of the object 200, when it is still loaded onto, or nonetheless, fixed to the sled 15), about a substantially horizontal axis (or nonetheless parallel to the plane or floor on which the trolley stands).

In particular, the handling unit 14 comprises the sled 15, which is also provided with a hole having a substantially horizontal axis and a toothed wheel 25 and a slot 57 for receiving a section of a fixed screw 30 positioned in a substantially vertical direction and provided with a protective element 35.

The handling unit 14 also comprises a pair of uprights 22 connected to each other by a crosspiece 24. The uprights 22, in turn, comprise slots 59 for guiding the vertical sliding of the sled 15.

Such set of elements is further supported by bars, in particular, with a stiffening tilting train 20.

The first sub-assembly for the vertical movement of the object transported 200 comprises one or more gear motors 55 placed on board the sled 15.

The gear motors 55 act on a gear held with the screw 30 to move the sled 15, and the object 200 supported by it, upwards and downwards in a substantially vertical direction.

In order to allow a rotation about a substantially horizontal axis of the object 200, the second sub-assembly comprises a gear motor 45 placed on board the sled 15 and adapted to actuate a toothed wheel 25 placed inside the hole of the sled 15 having a substantially horizontal axis.

The trolley 100 further comprises a rack 80 placed on the base 12 of the trolley 100 and adapted to interface with equipment 300 for assembling components of mechanical assemblies so as to regulate the position of the trolley 100 with respect to the equipment 300 being cooperated with to carry out the processing. In particular, the rack 80 is adapted to be engaged by a corresponding rotating element, for example, a pinion, for example, of a press, thus, wherein, with the pinion engaged on the rack 80, the rotation of the pinion in a first rotation direction results in the approaching of the trolley to the station or press, while the rotation of the pinion in a second rotation direction, opposite the first, results in the distancing of the trolley 100 from the press or station.

The trolley 100 further comprises a traction assembly 40, which commands two driving wheels 60 for the advancing and distancing of the trolley 100 respectively and a steering assembly 70. In particular, according to one embodiment, the driving wheels are operable independently and can thus be rotated both simultaneously and one at a time. Again, the two driving wheels can be rotated, also simultaneously, in opposite directions of rotation, for example, one forward and the other backward. The simultaneous opposite rotation of the two driving wheels 60 allows the rotation of the trolley on the floor about a substantially fixed rotation axis. For this purpose, the steering assembly 70 is formed by a part with a circular plan, which is rotatable with respect to the fixed part of the base 12, wherein the rotatable base rests on one or more free wheels (not visible in the figures) and thus each freely rotatable about a substantially vertical axis.

The supply of energy to the various users of the trolley 100 (wheels, gear motors, steering assembly, etc.) can be ensured by one or more batteries 50 on board the trolley, which are automatically rechargeable in regenerative mode and nonetheless contactless in the workstation or in any other dedicated site.

Finally, the trolley 100 comprises an electrical cabinet 75 on which a control panel 65 is placed, accessible by an operator due to a platform 85.

The trolley 100 also comprises a control panel 150 with which a memory module 160 is associated, adapted to store data and a software, which allows the trolley to perform the operations described below.

In particular, the control panel 150 is configured to allow the trolley 100 and the handling unit 14 to perform sequences of specific movements stored in the memory unit 160 associated with the control panel 150.

As can be seen in figures 3 and 4, the trolley 100 can lift or lower a load, for example, represented by an object 200.

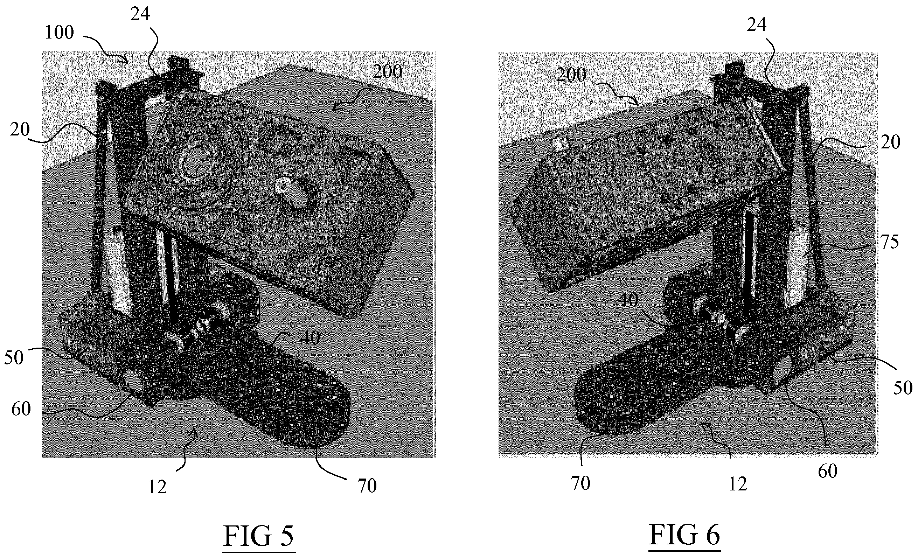

As can be seen in figures 5 and 6, the trolley 100 can rotate the object 200, for example, about a substantially horizontal axis.

Figures 7 and 8 illustrate the trolley in the preceding figures during processing at a workstation (press), comprising equipment 300 for assembling components of mechanical assemblies.

The equipment 300 is represented by way of example and comprises a base 310, two uprights 320 connected by a crosspiece 330 and it has a carousel 340 for assembling further mechanical components onto the object 200.

Trolleys 100 such as the one described in the present description can thus be used in a system comprising a plurality of equipment 300 for assembling components of mechanical assemblies, wherein the equipment is intended for assembling different components and wherein the trolley is intended for positioning different objects in respectively different positions at each station.

Thus, for each station, the trolleys according to the present invention are capable of storing the position to be assumed and the positioning of the object 300, and consequently positioning themselves and positioning the object automatically with respect to each station. As indicated previously, the trolleys 100 comprise a control panel 150 and a memory unit 160 associated with said control panel 150.

The control panel 150 is configured to allow the memory unit 160 to store, in an initialization phase, sequences of specific movements for each single piece of equipment 300 and repeat the sequence of specific movements for each difference piece of equipment 300 in successive processing phases.

An example of a first use of the trolley 100 according to the present invention can be summarized as follows.

From a predetermined area of the environment in which the trolley 100 is called to operate, for example, from a resting and/or parking area, the trolley, with an object 200 fixed to the sled 10, is guided by an operator (for example, positioned on the platform 85), along a predetermined path until it reaches a first station 300 (for example, a press), at which the trolley 100 is positioned, as comprised by the operations to be performed and wherein, in the same way, the object 200 is positioned (raised, rotated, translated, etc.) depending on the operations to be performed on the object 200. At the end of the operations at the first station, the trolley is guided from the first station to an unloading station (for unloading the object) and then to the resting or parking station, or to a second station for performing further operations on the object 200, and then from here, depending on the needs and/or circumstances, to the unloading and/or resting station, or to a third station and so on.

During this first use, the trolley control unit will be in set-up mode, thus wherein, at the end of the first use, the control unit will have stored all of the paths, all of the positions assumed at the different stations and also all of the positionings of the object 200 at said stations 300.

For example, the paths between the stations and the positions at different stations can be stored, arranging magnetic tags along the paths and at the stations, equipping the trolley with corresponding detectors. Again, by way of example, the different positionings of the object 200 can be stored, equipping the sled with position sensors (magnetic, optical or similar).

Thus, it follows from the above that for successive uses, the data stored in the memory during the first use will be reprocessed by the control unit and transformed into commands for the various users (wheels, gear motors, etcetera), thus, wherein, during successive uses, the trolley will independently retrace the same paths, it will assume the same positions at the various stations 300, and position the object as during the first use.

Clearly, the set-up step can be repeated each time it is necessary to store a new path and/or a new position etc.

Therefore, during operation of the trolley 100, it is placed, in a first initialization phase, at a piece of equipment 300 and performs a series of operations, which are stored by the memory unit 160 of the trolley.

As anticipated, such operations can comprise adjustments to the position of the trolley 100 with respect to the equipment 300, for example, by means of the rack 80, lifting or lowering of the object 200 by means of the first sub-assembly for the vertical movement of the object 200, rotating movements of the object 200 by means of the second sub-assembly to allow a rotation about a substantially horizontal axis of the object 200 or other.

In a second step, having stored said sequences of movements in the memory unit 160, the trolley 100 can repeat them when it is at the same piece of equipment 300 for successive assemblies or operations of the same type, thus increasing the automation of the overall system.

In fact, the trolley 100 is capable of recognizing the specific equipment 300 using techniques, such as magnetic tags at the workstation where the equipment 300 is placed, or lines or other symbols if the trolley 100 is provided with a camera and associating the corresponding sequence of movements to be performed with said specific equipment.

Clearly, modifications or improvements can be made to the invention thus described, dictated by specific or contingent needs, without departing from the scope of the invention as claimed below.

## Claims

1. A trolley (100) for transporting objects for composing mechanical assemblies, wherein said trolley (100) comprises a base (12) which supports a handling unit (14) provided with a sled (15) configured to interface with an object (200) to be carried and/or transported, wherein said handling unit (14) comprises a first sub-assembly for the vertical movement of the object (200) and a second sub-assembly for allowing a rotation around a substantially horizontal axis of the object (200), and wherein said trolley further comprises a control panel (150) configured to allow the trolley (100) and the handling unit to perform specific movement sequences stored in a memory unit (160) associated with said control panel (150).

2. A trolley (100) according to claim 1, wherein the handling unit (14) comprises a pair of uprights (22) connected to each other by means of a crosspiece (24), wherein said uprights (22) include slots (59) for guiding the vertical sliding of the sled (15).

3. A trolley (100) according to claim 2, wherein the first sub-assembly (55) for the vertical movement of the carried object (200) comprises a fixed screw (30) substantially parallel to said uprights (22), passing inside a hole (57) made in the same sled (15).

4. A trolley (100) according to claim 3, wherein the first sub-assembly for the vertical movement of the carried object (200) comprises one or more gear motors (55) placed on board said sled (15), and acting on a gear, which cooperates with the fixed screw (30).

5. A trolley (100) according to claim 2, wherein the second sub-assembly for allowing a rotation around a substantially horizontal axis of the object (200) comprises a gear motor (55) placed on board said sled (15) and adapted to operate a toothed wheel (25) placed inside a hole of the sled (15), said hole having a substantially horizontal axis.

6. A trolley (100) according to claim 1, wherein the trolley (100) comprises a rack (80) placed on the base (12) of the trolley (100) and adapted to interface with equipment (300) for assembling components of mechanical assemblies so as to regulate the position of the trolley (100) with respect to the equipment (300) being processed.

7. A trolley (100) according to claim 1, wherein the trolley (100) comprises a traction assembly (40), which commands the advancing of the trolley (100) and a steering assembly (70).

8. A trolley (100) according to claim 1, wherein the trolley (100) comprises means for recognizing specific equipment (300) for assembling components of mechanical assemblies for interfacing with.

9. A system comprising a plurality of trolleys (100), according to the preceding claims, and a plurality of equipment (300) for assembling components of mechanical assemblies wherein the trolleys (100) comprise a control panel (150) and a memory unit (160) associated with said control panel (150), wherein the control panel (150) is configured to allow the memory unit (160) to store, in an initialization phase, sequences of specific movements for each single piece of equipment (300) and to allow the control panel (150) to command the handling unit of the trolley (100) so as to repeat the specific sequence of movements for each different piece of equipment (300) in successive processing phases.
